# EUROPEAN PATENT APPLICATION

(11) **EP 2 521 333 A2**
(43) Date of publication of application: **07.11.2012**
(21) Application number: 12175997.1
(22) Date of filing: 19.06.2008
(51) Int. Cl.: H04L 29/06

(54) **Methods, Systems, and Apparatus for Content Licensing**

(30) Priority: 19.06.2007 US 945095 P
(62) Divisional of application: 08771518.1
(71) Applicant: Qualcomm Incorporated, San Diego, CA 92121-1714 (US)
(72) Inventor: Briggs, Robert D., San Diego, CA California 92121-1714 (US); Minear, Brian, San Diego, CA California 92121-1714 (US)
(74) Representative: Cupitt, Philip Leslie

(57) **Abstract**

A method of obtaining one or more licenses to use content is provided. The method includes scanning an original device to locate digital content residing thereon and requesting a license to use the digital content on the original device from a licensing server. Systems and apparatus for obtaining one or more licenses to use content are further provided.

## Description

### Claim of Priority under 35 U.S.C. §119

The present Application for Patent claims priority to Provisional Application No. 60/945,095 entitled METHODS, SYSTEMS, AND APPARATUS FOR CONTENT LICENSING filed June 19, 2007, and assigned to the assignee hereof and hereby expressly incorporated by reference herein.

### BACKGROUND

Portable electronic devices are ubiquitous. Many of these devices have the capability to allow a user to download music to such a device, e.g., via the Internet or an over-the-air interface. Once downloaded, a user may access and play the music using the device. The user may have to purchase a license that will allow download and use of the music at the portable electronic device. Unfortunately, the same music may not be accessible by the user from a different portable electronic device unless another license is purchased to allow the user to access the music at the other device.

Based on the forgoing, it would be advantageous to enable a user to lawfully access selected content already accessible by the user on a different device at a discounted price.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

A method of obtaining one or more licenses to use content is provided. The method may include scanning an original device to locate digital content residing thereon and requesting a license to use the digital content on the original device, a destination device, or a combination thereof from a licensing server.

In another aspect, a device for accessing content is provided. The device may include means for scanning an original device to locate digital content residing thereon and means for requesting a license to use the digital content on the original device, a destination device, or a combination thereof from a licensing server.

In another aspect, a device for accessing content is provided. The device may include a processor and a memory that are accessible to the processor. The memory includes at least one instruction for scanning an original device to locate digital content residing thereon and at least one instruction for requesting a license to use the digital content on the original device, a destination device, or a combination thereof from a licensing server.

In still another aspect, a computer program product is provided and may include a computer-readable medium. The computer-readable medium may include at least one instruction for causing a computer to scan an original device to locate digital content residing thereon and at least one instruction for causing a computer to request a license to use the digital content on the original device, a destination device, or a combination thereof from a licensing server.

In yet another aspect, a method of managing content licenses is disclosed and may include receiving a request for a license to use content at a destination device from an original device, receiving a list of digital content from the original device for which the license is requested, and searching a content-rights database to locate matching content.

In another aspect, a licensing server is disclosed and may include means for receiving a request for a license to use content at a destination device from an original device, means for receiving a list of digital content from the original device for which the license is requested, and means for searching a content-rights database to locate matching content.

In still another aspect, a licensing server is provided. The licensing server may include a processor and a memory that is accessible to the processor. The memory may include at least one instruction for receiving a request for a license to use content at a destination device from an original device, at least one instruction for receiving a list of digital content from the original device for which the license is requested, and at least one instruction for searching a content-rights database to locate matching content.

In yet another aspect, a computer program product is provided and may include a computer-readable medium. The computer-readable medium may include at least one instruction for causing a computer to receive a request for a license to use content at a destination device from an original device, at least one instruction for causing a computer to receive a list of digital content from the original device for which the license is requested, and at least one instruction for causing a computer to search a content-rights database to locate matching content.

In another aspect, a content licensing system is provided. The content licensing system may include a first device operable to access content and a licensing server in communication with the first device. The licensing server is operable to generate a license to use the content accessible by the first device.

In still another aspect, a content licensing system is provided. The content licensing system may include a first device operable to access content and a licensing server in communication with the first device. The licensing server is operable to generate a license to own a right to the content accessible by the first device.

In yet another aspect, a content licensing system is provided. The content licensing system may include a first device operable to access content, a second device, and a licensing server in communication with the first device and the second device. The licensing server is operable to generate a license to use the content accessible by the first device on the second device.

In another aspect, a content licensing system is provided. The content licensing system may include a first device operable to access content, a second device, and a licensing server in communication with the first device and the second device. The licensing server is operable to generate a license to own a right to the content accessible by the first device. Further, the second device is operable to access the content under the generated license.

To the accomplishment of the foregoing and related ends, the one or more aspects comprise the features hereinafter fully described and particularly pointed out in the claims. The following description and the annexed drawings set forth in detail certain illustrative aspects of the one or more aspects. These aspects are indicative, however, of but a few of the various ways in which the principles of various aspects can be employed and the described aspects are intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote the elements, and in which:

FIG. 1 is a block diagram illustrating a first exemplary, non-limiting aspect of a content licensing system;

FIG. 2 is a block diagram illustrating a second exemplary, non-limiting aspect of a content licensing system;

FIG. 3 is a block diagram illustrating a third exemplary, non-limiting aspect of a content licensing system;

FIG. 4 is a block diagram illustrating a fourth exemplary, non-limiting aspect of a content licensing system;

FIG. 5 is a block diagram illustrating a fifth exemplary, non-limiting aspect of a content licensing system;

FIG. 6 is a flow chart illustrating a method of obtaining a content license, according to one aspect;

FIG. 7 is a flow chart illustrating a method of providing a content license, according to yet another aspect.

FIG. 8 is a block diagram illustrating an exemplary data network, according to one aspect;

FIG. 9 is a functional block diagram illustrating one aspect of a server operable to deliver streaming content to one or more wireless devices over a wireless data network, according to one aspect; and

FIG. 10 is a block diagram illustrating an exemplary, non-limiting aspect of a wireless telephone, according to one aspect.

### DETAILED DESCRIPTION

The present systems, devices, apparatus, methods, and computer readable products are described in more detail hereinafter with reference to the accompanying drawings, in which aspects of the invention are shown. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure in conjunction with functionality in addition to or other than one or more of the aspects set forth herein.

As used herein, the word "exemplary" is used to mean "serving as an example, instance, or illustration." Any aspect described herein as "exemplary" is not necessarily to be construed as preferred or advantageous over other aspects.

The following description describes one or more aspects of a content licensing system. The content licensing system enables a user to obtain a license to use a selected content owned by a user on an original computing device or accessible by the user from the original computing device on a destination device. In another implementation, the content licensing system enables a user to purchase the rights to own a selected content owned by a user on the user's original device, or accessible by the user on the original computing device on a destination device.

According to one aspect, the content being licensed is protected digital content, which in one example, may be copyrighted content. Without any limitations, exemplary content that may be licensed for use or ownership includes applications, graphics, themes, audio, video, ringers, wallpapers, music, tones, pictures, address book, etc.

In one example, the content licensing system includes an original device, a destination device, and a licensing server. Each of the original device and the destination device includes a licensing client while the licensing server includes a licensing service. According to one aspect, the content licensing system further includes a distribution system. In one example, the licensing process starts by a user downloading and running the licensing client on the original device. In one example, the original device and destination device may be any type of computing device. In another example, the original device and /or destination device may be mobile devices.

In one example, pursuant to an agreement, the legal right holder of the content to be licensed authorizes the licensing server to grant a license to use or own all or a designated subset of the right holder's content to others for a fee, or other consideration (e.g., an appropriate subscription fee, an appropriate purchase price, etc.). Under the agreement, the right holder registers all or a selected subset of the right holder's content with a content-rights database accessible by the licensing server.

In one aspect, the licensing client operates to scan the content downloaded to, or accessible by, the original device. Thereafter, the user communicates with the licensing server via the licensing client requesting a license to use or purchase a selected content. The licensing service defined in the licensing server is operable to receive the user's request for the selected content and search a content-rights database for matching registered content. If matching registered content is located, the licensing server operates to create a new license to use or own the selected content on the destination device for an appropriate fee. In one example, the appropriate fee may be a discounted price. Thereafter, the selected content may be sent to the destination device pursuant to the new license agreement. In one example, the selected content may also be available to the original device pursuant to the new license agreement.

According to one aspect, the original device, the servers, and destination devices may be any type of wired or wireless terminals, including but not limited to, desktop computers, notebook computers, wireless telephones, pagers, PDAs, email devices, tablet computers, or other type of wired or wireless devices. In one or more aspects, the servers and the devices may be any type of devices and respective associated connections to the network may be wireless, wired, or any combination thereof. Thus, aspects of the content licensing system may be implemented using virtually any network configuration having a variety of servers and terminals that operate to provide the functions of the content licensing system as described herein.

In one implementation, the content licensing system may be implemented using a wireless device executing a runtime environment. One such runtime environment is the Binary Runtime Environment for Wireless® (BREW^{®}) software platform developed by QUALCOMM Incorporated of San Diego, California. The runtime environment is used to simplify operation of the device, such as by providing generalized calls for device specific resources. Notably, one or more aspects of the content licensing system are suitable for use with other types of runtime environments to provide content licensing to wired and wireless devices.

In one example wherein the original and/or destination devices are BREW-enabled, the content licensing system allows the user to access the selected content on the second destination device obtaining the rights through a subscription agreement or a buyout option.

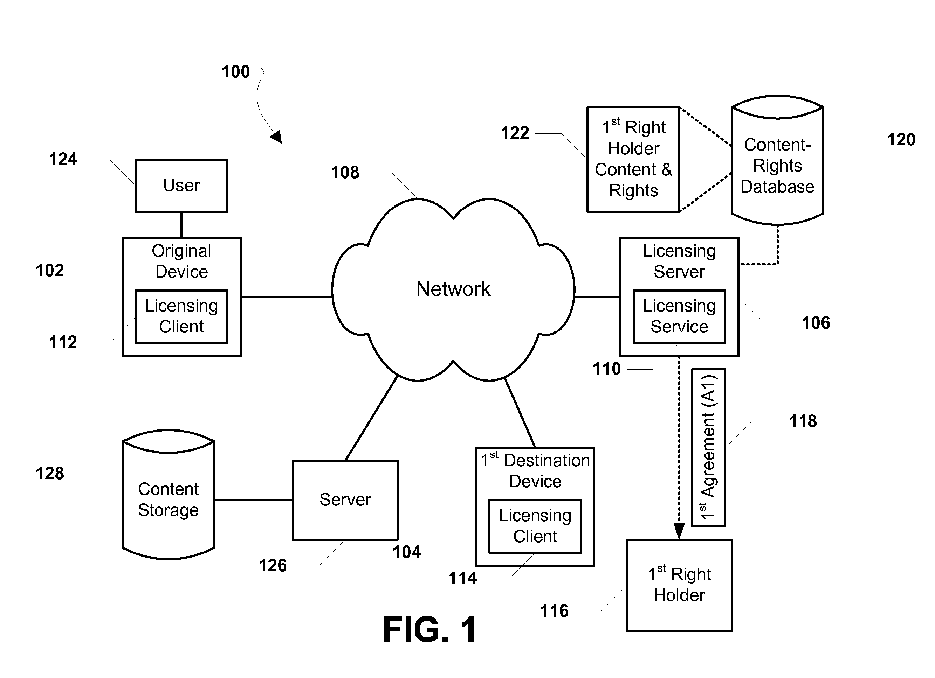

Referring initially to FIG. 1, a first exemplary, non-limiting aspect of a content licensing system is shown and is generally designated 100. As shown, the content licensing system 100 may include an original device 102, a destination device 104, and a licensing server 106. In a particular aspect, the licensing server 106 may communicate with the original device 102 and the first destination device 104 via a network 108 and associated communication channels. The network 108 may be any type of network. For example, the network 108 may be a wired network, a wireless network, a private network, a public network, or any combination thereof. Moreover, the associated communication channels may be any type of wired communication channel, wireless communication channel, or a combination thereof.

FIG. 1 indicates that the licensing server 106 may include a licensing service 110 therein. Further, the original device 102 may include a first licensing client 112 installed herein, e.g., within a memory of the original device 102. The destination device 104 may also include a second licensing client 114 therein.

As shown in FIG. 1, a first rights holder 116 may communicate with the licensing server 106, e.g., via the network 108. The first rights holder 116 may enter into a first agreement 118 with the licensing server 106, i.e., with the owner of the licensing server 106. As described in further detail herein, the first agreement 118 may grant a license to the licensing server 106, or owner thereof, to use or own all or a designated subset of the content created, owned, or otherwise associated with the first rights holder 116. The license may be granted for a fee or other consideration. FIG. 1 further shows that a content-rights database 120 may be connected to, and accessible by, the licensing server 106. The content-rights database 120 may store content and associated rights 122, e.g., content and rights received from the first rights holder 116.

FIG. 1 depicts that a user 124 may be associated with the original device 102. Moreover, a content server 126 may be connected to the network 108. A content storage database 128 may be connected to the content server 126. In a particular aspect, the user 124 may access selected content stored on the content storage database 128 via the network 108 through access provided by the content server 126. It is to be understood that the content storage database 128 may be any storage medium suitable for storing content.

In a particular aspect, the user 124 may access and use digital content residing on the original device 102. The user 124 may further access and use digital content that may reside on other network devices so long as such content is accessible by the original device 102. The user 124 may further use the original device 102 to access digital content stored remotely, e.g., through the network 108. According to one example, the user 124 may communicate with the licensing server 106 through the user interface provided by, or associated with, the original device 102. In another aspect, the user 124 may interact with the licensing server 106 through a user interface provided by a web browser.

As described in more detail below, in one aspect, the user 124 may obtain a license to use or own the content accessible to the user 124 via the original device 102 on a different device, such as the first destination device 104. In one aspect, the licensing server 106 may implement HTTPS, Web Services (SOAP), etc. to communicate to the first licensing client 112 or other components within the content licensing system 100.

In a particular aspect, the first rights holder 116 may own the legal rights to the first rights holder's digital content. The first rights holder 116 may be an entity configured to manage and coordinate the production, manufacture, distribution, and promotion of the digital content as well as the enforcement of copyright protection of the digital content.

As the legal right holder, pursuant to the first agreement 118, the first rights holder 116 may authorize the licensing server 106 to grant a license to use or own all or a designated subset of the first rights holder's content for a fee or other consideration. For instance, pursuant to the first agreement 118, the first rights holder 116 may authorize the licensing server 106 to license the use of content owned by the first rights holder 116 for an agreed upon subscription fee. Alternatively, the first rights holder 116 may authorize the licensing server 106 to license the ownership of a selected content for an agreed upon purchase fee. In one example, the first rights holder 116 may register all or a selected subset of the first rights holder's content with the content-rights database 120.

In one aspect, the user 124 may communicate with the licensing server 106 to request a license to use or purchase selected content. In one example, the selected content may be stored locally on the original device 102 associated with the user 124. In another example, the selected content may be stored remotely in the content storage database 128 that is accessible by the original device 102 via the network 108 and the content server 126.

Further, the first licensing client 112 within the original device may be operable to scan the original device 102 to discover, or otherwise locate, the digital content that resides on the original device 102 or that is accessible by the original device 102. In such a case in which the digital content is stored within the content storage database 128, the first licensing client 112 may be operable to scan the content storage database 128 by utilizing the content server 126. It is to be understood that the content that is accessible by the original device 102 or downloaded to the original device 102 may include, any digitally protected content, e.g., music, video, applications, pictures, ringtones, wallpaper, themes, game levels, scores, contacts, calendar, etc. As used herein, the term "application" may also include files having executable content, such as object code, scripts, byte code, markup language files, and patches. In addition, an "application" as referred to herein, may also include files that are not executable in nature, such as documents that may need to be opened or other data files that need to be accessed.

It may be appreciated that the user 124 may request to have the entire content, or a subset of the content, stored on the content storage database 128 scanned. It must further be noted that the user 124 may be given an option to have all or a selected subset of network servers scanned in order to locate content owned or accessible by the user 124 via the original device 102. In one aspect, the first licensing client 112 may be operable to scan a library file configured to include metadata associated with the content downloaded to the original device 102 or accessible by the original device 102. According to one example, the first licensing client 112 may generate a list containing metadata associated with the scanned content. In another example, the content may be selected from a catalogue file on the original device 102.

Once the scanning operation has concluded, the first licensing client 112 may provide the user with an option to obtain a new license to access the entire scanned content, or a subset of the scanned content, via the first destination device 104. Pursuant to the new license agreement, the user may have the right to use or own the selected content on the first destination device 104 for an appropriate fee. For example, the user may select any desired subset or the entire content by marking boxes associated with the metadata corresponding to the selected content.

As will be described in more detail below, the user 124 may obtain a license to access the selected content on the first destination device 104 under a subscription plan. Alternatively, the user may obtain a license to own the digital content on the first destination device 104 for a suitable purchase price. In one example, the purchase price or the subscription price may be a discounted price.

In a particular aspect, the licensing service 110 may receive a user request for selected content and search a content-rights database 120 for the requested content. In one implementation, the licensing service 110 may search the content-rights database 120 for registered content having metadata matching the metadata associated with the user-selected content. In one instance, the user request may include a list of metadata associated with the selected content. According to one aspect, the licensing service 110 searches the list of metadata associated with the registered content stored to the content-rights database 120.

If the licensing service 110 locates metadata associated with the registered content that matches the metadata associated with the end user-selected content, the first licensing client 112 within the original device 102 may be notified. At this point, the user 124 may communicate a preferred type of license to the licensing service 110. Upon receiving the user's choice of license, a license having a type corresponding to the user's preference may be generated.

In one instance, for example, the second licensing client 114 may be downloaded to the first destination device 104 from the licensing server 106 via the network 108. After the second licensing client 114 is downloaded to the first destination device 104, the first destination device 104 may be enabled to receive the selected content and the licensing information from the licensing server 106. Upon receiving the licensing information and the selected content, the user 124 may execute the second licensing client 114 in order to access the selected content on the first destination device 104.

According to one example, the content licensing system 100 may send the selected content and licensing information to the first destination device 104 substantially automatically upon the initial connection of the first destination device 104. For instance, after the first destination device 104 connects to the network 108 and the connection of the first destination device 104 to the network 108 is confirmed, the selected content and the licensing information may be sent to the first destination device 104 without any interaction with the user 124, or with minimal interaction from the user 124. The licensing server 106 may further transmit a copy of the new license agreement to the original device 102.

In one aspect, the first licensing client 112 and the second licensing client 114 may be a software application that may be executed within the original device 102 and the destination device 104, respectively, as described herein. In this manner, the user 124 is given an opportunity to use or own the user-selected content lawfully under the new license agreement - even if the content were originally downloaded unlawfully.

According to one example, the content licensing system 100 may be implemented to enable the user to download or access the user's music accessible by the original device 102 on the destination device 126. In one example, the original device 102 may be a desktop computing device and the first destination device 104 a mobile device.

In one example, the first licensing client 112 may scan the original device 102 and locate one hundred (100) music files downloaded onto the original device 102. In one instance, the user 124 may have downloaded the 100 music files on the original device for a total purchase price of one hundred dollars ($100.00). The scanning operation by the first licensing client 112 may further locate yet another two hundred (200) music files accessible by the original device 102 defined on other computing devices on the network 108. In one example, the user may have access to the 200 music files without paying the required purchase fee of two hundred dollars ($200.00). In other words, the user 124 may be accessing the 200 files without proper authorization.

According to one example, while the user 124 may want to download or access all of the three hundred (300) music files on the first destination device 104 associated with the user 124, the user 124 may not want to pay yet another one hundred dollars ($100.00) to download the legitimate 100 music files onto the first destination device 104. Additionally, the user 124 may desire to download the illegitimate 200 music files on the first destination device 104 with proper authorization, without paying the required two hundred dollar ($200.00) fee.

Accordingly, in one aspect, the content licensing system may beneficially provide the user 124 with an opportunity to download the entire 300 music files onto the first destination device 104 under a new license agreement at a discount price. In this manner, the user 124 is not required to look through yet another catalogue in order to find and download the user's preferred music files that were present in the catalogue associated with the original device 102. Additionally, the user may access the user-selected music at a discounted price.

In this manner, the content licensing system 100 may provide one or more music label companies that own the rights and content, the opportunity to receive payments for the use of the illegitimate 200 music files on the first destination device 104 by the user 124. Most likely, the music label companies would not have received any consideration for the use of the illegitimate 200 music files on the original device 102 by the user 124. Additionally, the content licensing system 100 may provide the one or more music label companies the opportunity to up sale additional music files to the user 124 based on the type of music files residing on the user's device or accessible by the user.

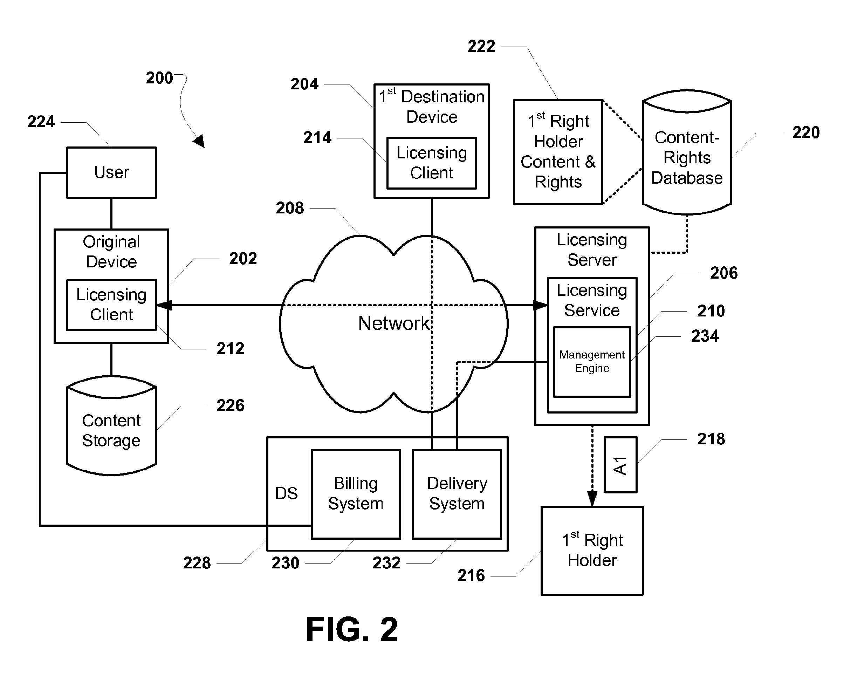

Proceeding to FIG. 2, a second exemplary, non-limiting aspect of a content licensing system is shown and is generally designated 200. As shown, the content licensing system 200 may include an original device 202, a destination device 204, and a licensing server 206. In a particular aspect, the licensing server 206 may communicate with the original device 202 and the first destination device 204 via a network 208 and associated communication channels. The network 208 may be any type of network. For example, the network 208 may be a wired network, a wireless network, a private network, a public network, or any combination thereof. Moreover, the associated communication channels may be any type of wired communication channel, wireless communication channel, or a combination thereof.

FIG. 2 indicates that the licensing server 206 may include a licensing service 210 therein. Further, the original device 202 may include a first licensing client 212 installed herein, e.g., within a memory of the original device 202. The destination device 204 may also include a second licensing client 214 therein.

As shown in FIG. 2, a first rights holder 216 may communicate with the licensing server 206, e.g., via the network 208. The first rights holder 216 may enter into a first agreement (A1) 218 with the licensing server 206, i.e., with the owner of the licensing server 206. As described in further detail herein, the first agreement 218 may grant a license to the licensing server 206, or owner thereof, to use or own all or a designated subset of the content created, owned, or otherwise associated with the first rights holder 216. The license may be granted for a fee or other consideration.

FIG. 2 further shows that a content-rights database 220 may be connected to, and accessible by, the licensing server 206. The content-rights database 220 may store content and associated rights 222, e.g., content and rights received from the first rights holder 216.

FIG. 2 depicts that a user 224 may be associated with the original device 202. Moreover, a content storage database 226 may be connected to the original device 202. In a particular aspect, the user 224 may use the original device 202 to access selected content stored on the content storage database 226. It is to be understood that the content storage database 226 may be any storage medium suitable for storing content.

As illustrated in FIG. 2, the content licensing system 200 may further include a distribution system 228 that may be accessed by the original device 202 via the network 208. FIG. 2 shows that the distribution system 228 may include a billing system 230 and a delivery system 232 therein. Moreover, FIG. 2 indicates that the licensing server 206 may further include a management engine 234, e.g., within the licensing service 210.

In a particular aspect, the licensing server 206 may be similar in configuration, and operation, to the licensing server 106 (FIG. 1) described in conjunction with respect to FIG. 1. The licensing server 206 may include the authorization to grant the user 224 a license to use or own the user-selected content from the original device 202 on a first destination device 204 pursuant to the agreement 218 in place between the licensing server 206 and the first rights holder 216.

In one example, the licensing process begins by the user 224 downloading the first licensing client 212 to the original device 202. In one example, the first licensing client 212 may use a user interface provided by a web browser in order to communicate to the licensing server 206 and initiate the licensing process. Alternatively, the first licensing client 212 may initiate the licensing process using a user interface provided by the original device 202.

After the first licensing client 212 is downloaded, the first licensing client 212 may be executed on the original device 202 to scan the original device 202 to located content that resides on the original device 202 or content that is accessible by the user 224 via the original device 202. It may be appreciated that the content may also be stored to the content storage database 226, which may be local or remotely residing on a network device.

According to one aspect, the first licensing client 212 may scan a library file in the original device 202 or in the content storage database 226. The library file may include a list of metadata associated with the selected content. In another aspect, the first licensing client 212 may generate a list of metadata associated with the content on the network devices accessible to the user 224 by way of the original device 202.

At this point, the user 224 may be given an option to obtain a new license to access the entire content, or a selected subset of the content, on the first destination device 204.

After the user 224 makes a selection, the first licensing client 212 may send the user request for the selected content to the licensing service 210 within the licensing server 206. According to one aspect, the user request that is sent may include the list of metadata associated with the selected content. In one example, the management engine 234 within the licensing server 206 may analyze the user request and search the content-rights database 220 for the registered content that includes metadata that matches the metadata associated with the user-selected content. In one example, the licensing server 206 may host the business logic used for licensing the use or ownership of content that resides on, is accessible to, the original device 202.

According to one aspect, the management engine 234 may scan a list of metadata associated with the registered content on the content-rights database 220 in order to find, or locate, the registered content that includes metadata that matches the metadata associated with the selected content. If matching metadata associated with the selected content has been located, the user 224 may be notified. After receiving the notification, the user 224 may choose to proceed with obtaining a license to own the selected content on the first destination device 204. Alternatively, the user may choose to obtain a license to use the selected content under a subscription plan. Then, the user's preference may be communicated to the licensing service 210.

Upon receiving the user's preference, the licensing service 210 may generate a new license agreement and forward a list of the metadata associated with the user-selected content, licensing information, and the associated fees to the distribution system 228. The delivery system 232 within the distribution system 228 may receive the list of metadata associated with the selected content. The delivery system 232 may further access the content-rights database 220 in order to retrieve the selected content. The delivery system 232 may deliver the selected content to the second licensing client 214 defined on the first destination device 204. For instance, in one example, the licensing server 206 may communicate with the distribution system 230 in order to invoke a delivery operation for the delivery of the selected content.

In a particular aspect, the billing system 230 within the distribution system 228 may receive the licensing information and the fee information associated with the new license. Further, the billing system 230 may bill the user 224 directly for any fees due under the new license agreement. According to one example, the licensing clients 212, 214 may interact, and communicate, with the licensing server 206 over HTTP communication protocol when sending the list of metadata associated with the selected content to be licensed. The licensing server 206 may communicate with the distribution system 228 over SOAP or HTTP.

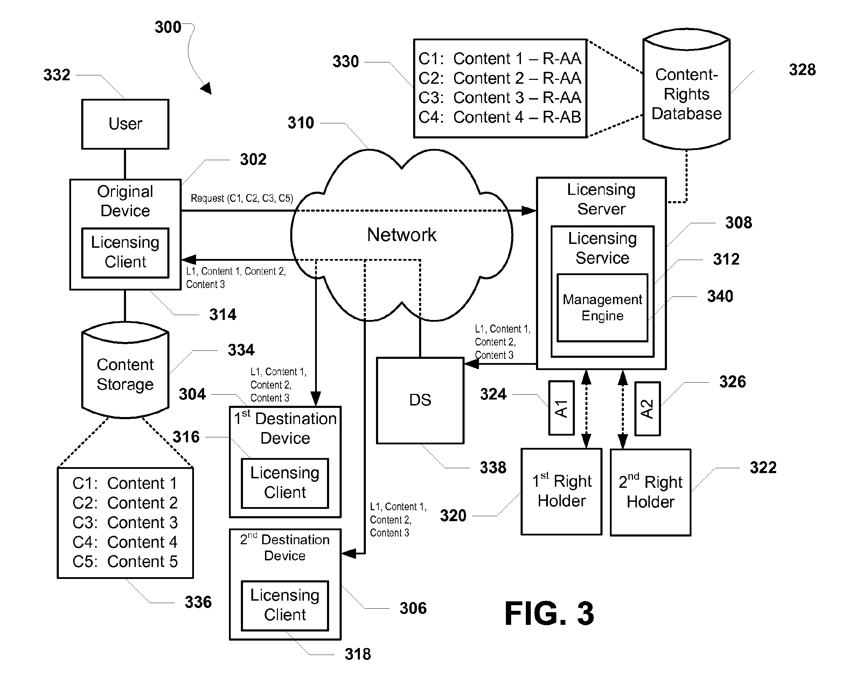

Referring now to FIG. 3, a third exemplary, non-limiting aspect of a content licensing system is shown and is generally designated 300. As shown, the content licensing system 300 may include an original device 302, a first destination device 304, a second destination device 306, and a licensing server 308. In a particular aspect, the licensing server 308 may communicate with the original device 302, the first destination device 304, and the second destination device 306 via a network 310 and associated communication channels. The network 310 may be any type of network. For example, the network 310 may be a wired network, a wireless network, a private network, a public network, or any combination thereof. Moreover, the associated communication channels may be any type of wired communication channel, wireless communication channel, or a combination thereof.

FIG. 3 indicates that the licensing server 308 may include a licensing service 312 therein. Further, the original device 302 may include a first licensing client 314 installed herein, e.g., within a memory of the original device 302. The first destination device 304 may also include a second licensing client 316 therein. Moreover, the second destination device 306 may include a third licensing client 318 installed therein.

As shown in FIG. 3, a first rights holder 320 and a second rights holder 322 may communicate with the licensing server 308, e.g., via the network 310. The first rights holder 320 may enter into a first agreement (A1) 324 with the licensing server 308, i.e., with the owner of the licensing server 308. In addition, the second rights holder 322 may enter into a second agreement (A2) 326 with the licensing server 308, i.e., with the owner of the licensing server 308. As described in further detail herein, the first agreement 324 and the second agreement 326 may grant licenses to the licensing server 308, or owner thereof, to use or own all or a designated subset of the content created, owned, or otherwise associated with the first rights holder 320 and the second rights holder 322, respectively. The licenses may be granted for a fee or other consideration.

FIG. 3 further shows that a content-rights database 328 may be connected to, and accessible by, the licensing server 308. The content-rights database 328 may store content and associated rights 330, e.g., content and rights received from the first rights holder 320 and the second rights holder 322.

FIG. 3 depicts that a user 332 may be associated with the original device 302. Moreover, a content storage database 334 may be connected to the original device 302 and content 336 may be stored therein. In a particular aspect, the user 332 may use the original device 302 to access selected content stored on the content storage database 334. It is to be understood that the content storage database 334 may be any storage medium suitable for storing content.

As illustrated in FIG. 3, the content licensing system 300 may further include a distribution system 338 that may be accessed by the original device 302 via the network 310. The distribution system 338 may be configured, and may operate, similar to the distribution system 228 (FIG. 2), described above. FIG. 3 indicates that the licensing server 308 may further include a management engine 340, e.g., within the licensing service 312.

As described above, the content 336 may be stored on the content storage database 334. In a particular aspect, the content storage database 334 may include a list of user content and the associated metadata. For instance, as illustrated in FIG. 3, content 1, content 2, content 3, content 4, and content 5 can, respectively, include metadata C1, C2, C3, C4, and C5 associated therewith.

The user 332 may choose to access the entire content 336, or a selected subset of the content 336, on the first destination device 304 or the second destination device 306. In a particular aspect, the first licensing client 304 may send a user request to access the selected content having the metadata C1, C2, C3, and C5 to the licensing service 308. The management engine 340 within the licensing service 308 may analyze the user request and initiate a search of the content-rights database 328 for registered content that includes metadata matching the metadata that is associated with the user-selected content.

In the illustrated example, the first rights holder 320 may include content that is registered with the content-rights database 328. The content may include metadata C1, C2, and C3 with the content-rights database 328. Rights, R-AA, may be created pursuant to the first agreement 324 and the rights, R-AA, may be associated with the metadata C1, C2, and C3. Comparatively, rights, R-AB, may also be created pursuant to the second agreement 326 between the second rights holder 322 and the licensing server 308, i.e., the owner thereof.

Accordingly, a search of the content-rights database 328 by the management engine 340 for the registered content having metadata matching that of the user-selected content results in locating matches for the selected content C1, C2, and C3. Conversely, the user request for the content having the metadata C5 cannot be fulfilled since the metadata C5 associated with the content 5 is not registered with the content-rights database 328 under either the first agreement 322 or the second agreement 326. At this point, the user 332 may be notified that a new license to access the content C5 on the first destination device 304 or the second destination device 306 cannot be obtained for a discounted price.

After receiving the notification, the user 332 may choose to proceed with obtaining a license to access the registered content, e.g., the subset of the selected content. For instance, the user 332 may choose a purchase option and communicate the user choice to the licensing service 312. The management engine 340 may generate a new license that grants the user 332 the right to own the selected content 1, content 2, and content 3 on the first destination device 304 for an appropriate fee.

In another aspect, the user 332 may request to a license to use the selected content on the second destination device 306 for an appropriate subscription fee. The licensing information and the metadata associated with the selected content may be sent to the distribution system 338. Using the list of metadata, the distribution system 338 may obtain content 1, content 2, and content 3 from the content-rights database 328 and forward the selected content to the first destination device 304 and second destination device 306. In one example, the distribution system 338 may be a BREW^{®} delivery system.

Prior to forwarding the selected content to the first destination device 304 and the second destination device 306, the second licensing clients 316 and the third licensing client 318 may be downloaded to the first destination device 304 and the second destination device 306, respectively. After the licensing clients 304, 306 are downloaded to the first destination device 304 and second destination device 306, the destination devices 304, 306 may be enabled to receive the selected content and the corresponding licensing information from the licensing server 308. Upon receiving the licensing information and the selected content, the user 332 may access the selected content on the first destination device 304 or the second destination device 306.

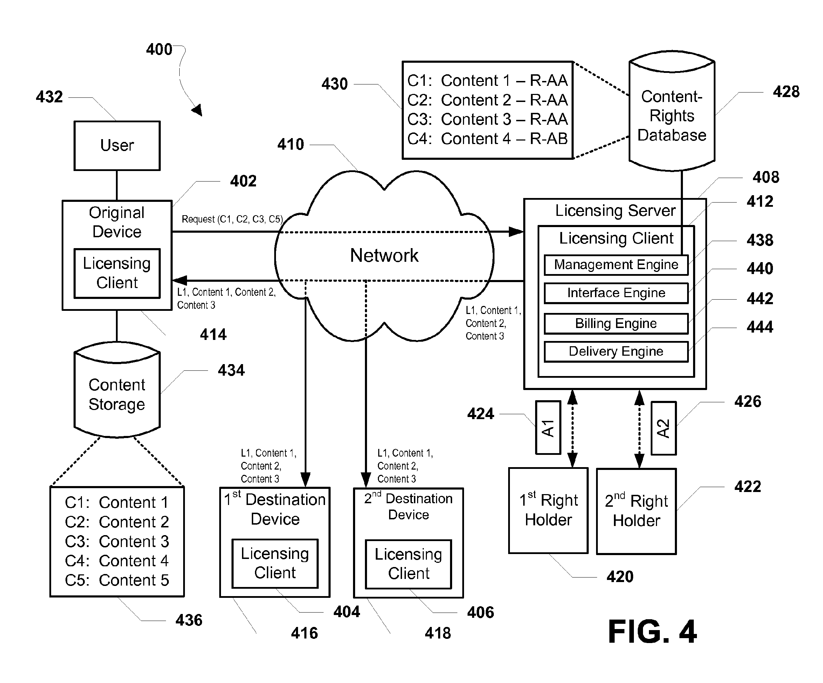

Referring to FIG. 4, a fourth exemplary, non-limiting aspect of a content licensing system is shown and is generally designated 400. As shown, the content licensing system 400 may include an original device 402, a first destination device 404, a second destination device 406, and a licensing server 408. In a particular aspect, the licensing server 408 may communicate with the original device 402, the first destination device 404, and the second destination device 406 via a network 410 and associated communication channels. The network 410 may be any type of network. For example, the network 410 may be a wired network, a wireless network, a private network, a public network, or any combination thereof. Moreover, the associated communication channels may be any type of wired communication channel, wireless communication channel, or a combination thereof.

FIG. 4 indicates that the licensing server 408 may include a licensing service 412 therein. Further, the original device 402 may include a first licensing client 414 installed herein, e.g., within a memory of the original device 402. The first destination device 404 may also include a second licensing client 416 therein. Moreover, the second destination device 406 may include a third licensing client 418 installed therein.

As shown in FIG. 4, a first rights holder 420 and a second rights holder 422 may communicate with the licensing server 408, e.g., via the network 410. The first rights holder 420 may enter into a first agreement (A1) 424 with the licensing server 408, i.e., with the owner of the licensing server 408. Furthermore, the second rights holder 422 may enter into a second agreement (A2) 426 with the licensing server 408, i.e., with the owner of the licensing server 408. As described in further detail herein, the first agreement 424 and the second agreement 426 may grant licenses to the licensing server 408, or owner thereof, to use or own all or a designated subset of the content created, owned, or otherwise associated with the first rights holder 420 and the second rights holder 422, respectively. The licenses may be granted for a fee or other consideration.

FIG. 4 further shows that a content-rights database 428 may be connected to, and accessible by, the licensing server 408. The content-rights database 428 may store content and associated rights 430, e.g., content and rights received from the first rights holder 420 and the second rights holder 422.

FIG. 4 depicts that a user 432 may be associated with the original device 402. Moreover, a content storage database 434 may be connected to the original device 402 and content 436 may be stored therein. In a particular aspect, the user 432 may use the original device 402 to access selected content stored on the content storage database 434. It is to be understood that the content storage database 434 may be any storage medium suitable for storing content.

As illustrated in FIG. 4, the licensing server 408 may further include a management engine 438, an interface engine 440, a billing engine 442, and a delivery engine 444. The management engine 438, the interface engine 440, the billing engine 442, and the delivery engine 444 may be part of the licensing service 412.

In a particular aspect, the user 432 may initiate a licensing process by downloading the first licensing client 414 to the original device 402. After the download is complete, the first licensing client 414 may scan the original device 402 for the digital content that is downloaded to the original device 402 or the digital content that is accessible by the user using the original device 402. As shown in FIG. 4, the content 436 that may be accessed by the original device 402, e.g., content 1, content 2, content 3, content 4, and content 5 may include metadata C1, C2, C3, C4, and C5, respectively.

The user 432 may request access to the selected content 1, content 2, and content 3 on the first destination device 404 and the second destination device 406. Thereafter, the first licensing client 414 may send, or otherwise transmit, the user request to access the selected content 1, content 2, and content 3 on the first destination device 404 and second destination device 406 to the licensing service 412.

According to one aspect, the interface engine 440 may receive the user request and may provide interfaces to the original device 402, the first destination device 404, and the second destination device 406. In this manner, the interface engine 440 may provide the user 432 an opportunity to view the content stored on, or accessible by, the original device 432.

Upon receiving the request, the interface engine 440 may communicate the user request to the management engine 438. In one example, the management engine 438 may analyze the user request and initiate a search of the content-rights database 428 for registered content that includes metadata that matches the metadata that corresponds to the user-selected content. In one example, the first rights holder 420 may have registered the content 1, content 2, content 3, and content 5 with the content-rights database 428. However, the second rights holder 422 may have no content registered in the content-rights database 428 by the second rights holder 422.

A search of the content-rights database 428 by the license management engine 438 may result in locating metadata that matches the metadata associated with content 1, content 2, and content 3. The user request for content 5, on the other hand, cannot be fulfilled as the metadata C5 is not registered with the content-rights database 428. After the search is complete, the interface engine 440 may notify the first licensing client 414 of the options available to the user regarding obtaining a new license and the associated fee options.

After receiving the notification, the user 432 may choose to proceed with accessing the registered content associated with the metadata C1, C2, and C3. At this point, the user's choice may be communicated to the interface engine 440. Thereafter, the management engine 438 may generate a new license that grants the user 432 the right to use the selected content on the first destination device 404 and second destination device 406 under a subscription plan or a buy out option.

In a particular aspect, the delivery engine 444 may transmit, or otherwise send, the second licensing client 416 on the first destination device 404 copies of the registered content 1, content 2, and content 3 and the new license agreement L1. Similarly, the delivery engine 444 may transmit, or otherwise send, the licensing client 418 on the second destination device 418 copies of the registered content 1, content 2, and content 3 and the new license agreement L1. In another aspect, the delivery engine 444 may transmit, or otherwise send, the selected content and the new license to the original device 402.

It may be appreciated that the new license obtained via the licensing server 408 may grant the user 432 the right to legally own or access selected content that is registered with the content-rights database 428. As such, in one example, the content licensing system may be implemented in order to grant a user the right to use or download content on a destination device 404, 406 irrespective of the manner the user initially obtained access to the content or downloaded the content to the original device 402. In other words, if the user 432 originally downloaded the content without permission, the user 432 may be granted a license to use the illegitimate content on the first destination device 404, the second destination device 406, or a combination thereof. Accordingly, the previous illegitimate, unauthorized use of the content may be authorized and legitimized.

It may further be appreciated that according to one example, prior to obtaining the new license, the user 432 may be required to provide authenticating information. For instance, the user 432 may be asked to provide the first licensing client 414 with proper authentication credentials associated with the user 432, e.g., a password. Furthermore, the first licensing client 414 may provide the licensing server 408 with the authentication credentials received from the user 432 and validate the authentication.

It may also be appreciated that the user may have an option to purchase different types of use licenses with different license fees. For example, pursuant to the terms of the new license agreement, the licensing server 408 may allow the user to use the content for only a limited number of times, only for a certain total time, only on a certain type of machine, etc. Furthermore, in one aspect, the user 432 may obtain access to the desired content without the need to transfer the content 436 from the original device 402 to the destination device 404, 406.

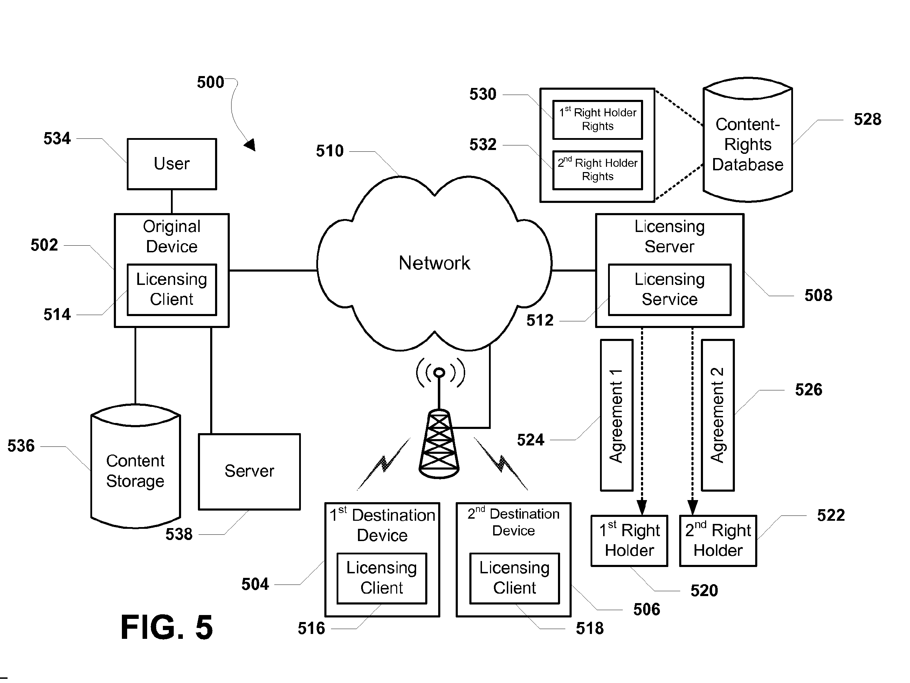

Referring now to FIG. 5, a fifth exemplary, non-limiting aspect of a content licensing system is shown and is generally designated 500. As shown, the content licensing system 500 may include an original device 502, a first destination device 504, a second destination device 506, and a licensing server 508. In a particular aspect, the licensing server 508 may communicate with the original device 502, the first destination device 504, and the second destination device 506 via a network 510 and associated communication channels. The network 510 may be any type of network. For example, the network 510 may be a wired network, a wireless network, a private network, a public network, or any combination thereof. Moreover, the associated communication channels may be any type of wired communication channel, wireless communication channel, or a combination thereof.

FIG. 5 indicates that the licensing server 508 may include a licensing service 512 therein. Further, the original device 502 may include a first licensing client 514 installed herein, e.g., within a memory of the original device 502. The first destination device 504 may also include a second licensing client 516 therein. Moreover, the second destination device 506 may include a third licensing client 518 installed therein.

As shown in FIG. 5, a first rights holder 520 and a second rights holder 522 may communicate with the licensing server 508, e.g., via the network 510. The first rights holder 520 may enter into a first agreement (A1) 524 with the licensing server 508, i.e., with the owner of the licensing server 508. Additionally, the second rights holder 522 may enter into a second agreement (A2) 526 with the licensing server 508, i.e., with the owner of the licensing server 508. As described in further detail herein, the first agreement 524 and the second agreement 526 may grant licenses to the licensing server 508, or owner thereof, to use or own all or a designated subset of the content created, owned, or otherwise associated with the first rights holder 520 and the second rights holder 522, respectively. The licenses may be granted for a fee or other consideration.

FIG. 5 further shows that a content-rights database 528 may be connected to, and accessible by, the licensing server 508. The content-rights database 528 may store content and associated rights 530 received from the first rights holder 520 and content and associated rights 532 received from the second rights holder 522.

FIG. 5 indicates that a user 534 may be associated with the original device 502. Moreover, a content storage database 536 may be connected to the original device 502. Further, a server 538 may be connected to the original device 502 and may be used to access the content storage database 536. In a particular aspect, the user 534 may use the original device 502 to access selected content stored on the content storage database 536. It is to be understood that the content storage database 536 may be any storage medium suitable for storing content.

As illustrated in FIG. 5, the content licensing system 500 may further include one or more communication towers 540. Each communication tower 540 may be connected to a base station (not shown) and may serve one or more wireless devices. Accordingly, the first destination device 504 and the second destination device 506 may be cellular telephones, pagers, portable digital assistants (PDA), wireless enabled laptops, other portable electronic devices capable of wirelessly communicating with other electronic devices, or a combination thereof. Further, the first destination device 504 and the second destination device 506 may communicate with the network 510 and the other components connected thereto via the communication tower 540.

In a particular aspect, data may be transmitted between the first wireless mobile destination device 504 and the second wireless mobile destination device 506, respectively, and the communication tower 540. As will be described in detail below, communication between the wireless mobile destination devices 504, 506 and the communication tower 540 may be based on different technologies. The data received by the communication tower 540 may sent to a base station (not shown) and then, the data may be forwarded to a mobile switching center (MSC) (not shown). The MSC may be connected to the network 510, which may be a high-speed data network.

The content licensing system 500 may operate in a manner similar to the previously described systems 100, 200, 300, 400. Accordingly, the user 534 may obtain licenses to access content on the first wireless destination device 504, the second wireless destination device 506, or a combination thereof at least partially based on the content currently stored on, or available to, the original device 502 and at least partially based on the content and associated rights 530, 532 stored on the content-rights database 528.

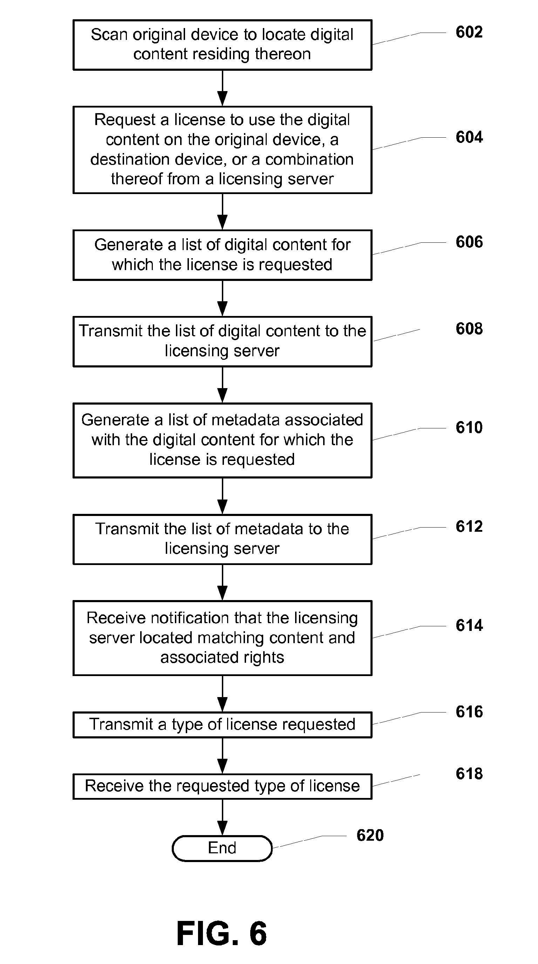

Referring now to FIG. 6, a method of obtaining a content license is shown, according to one aspect. Commencing at block 602, the original device may be scanned, e.g., by a processor therein, to locate digital content residing thereon. At block 604, the original device may request a license from a licensing server to use the digital content on the original device, a destination device, or a combination thereof. Further, at block 606, the original device may generate a list of digital content for which the license is requested. At block 608, the original device may transmit the list of digital content to the licensing server. At block 610, the original device may generate a list of metadata associated with the digital content for which the license is requested. Moreover, at block 612, the original device may transmit the list of metadata to the licensing server.

Moving to block 614, the original device may receive notification that the licensing server located matching content and associated rights. At block 616, the original device may transmit a type of license requested. At block 618, the original device may receive the requested type of license. Then, the method may end at state 620.

In a particular aspect, the digital content initially located at the original device may be authorized for use, unauthorized for use, or a combination thereof. Further, the license received may authorize the use of digital content that was previously unauthorized for use.

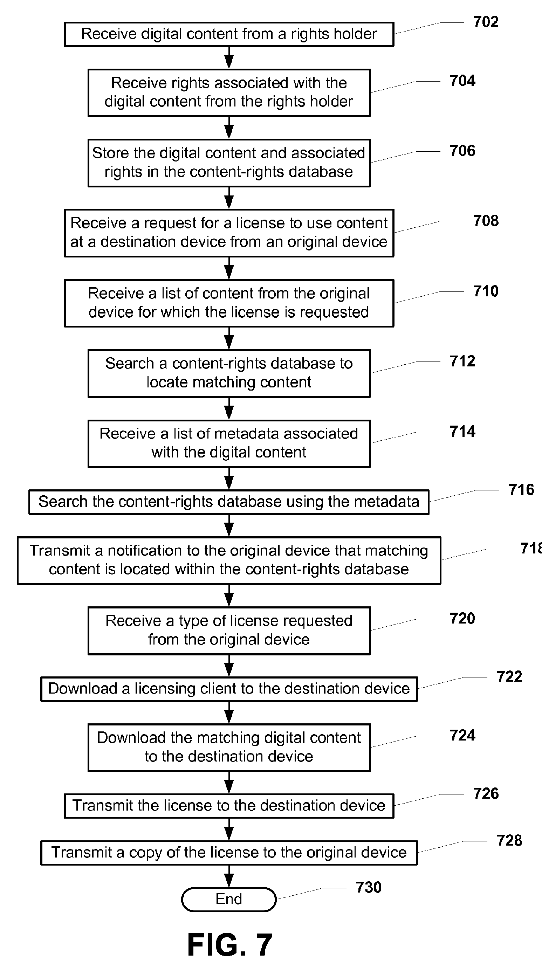

FIG. 7 illustrates a method of providing a content license, according to yet another aspect. Beginning at block 702, a licensing server may receive digital content from a rights holder. At block 704, the licensing server may receive rights associated with the digital content from the rights holder. Further, at block 706, the licensing server may store the digital content and associated rights in the content-rights database.

Proceeding to block 708, the licensing server may receive a request for a license to use content at a destination device from an original device. At block 710, the licensing server may receive a list of content from the original device for which the license is requested. Moreover, at block 712, the licensing server may search a content-rights database to locate matching content.

Moving to block 714, the licensing server may receive a list of metadata associated with the digital content. At block 716, the licensing server may search the content-rights database using the metadata. Additionally, at block 718, the licensing server may transmit a notification to the original device that matching content is located within the content-rights database.

At block 720, the licensing server may receive a type of license requested from the original device. Continuing to block 722, the licensing server may download a licensing client to the destination device. Moreover, at block 724, the licensing server may download the matching digital content to the destination device. At block 726, the licensing server may transmit the license to the destination device. Thereafter, at block 728, the licensing server may transmit a copy of the license to the original device. Then, the method may end at state 730.

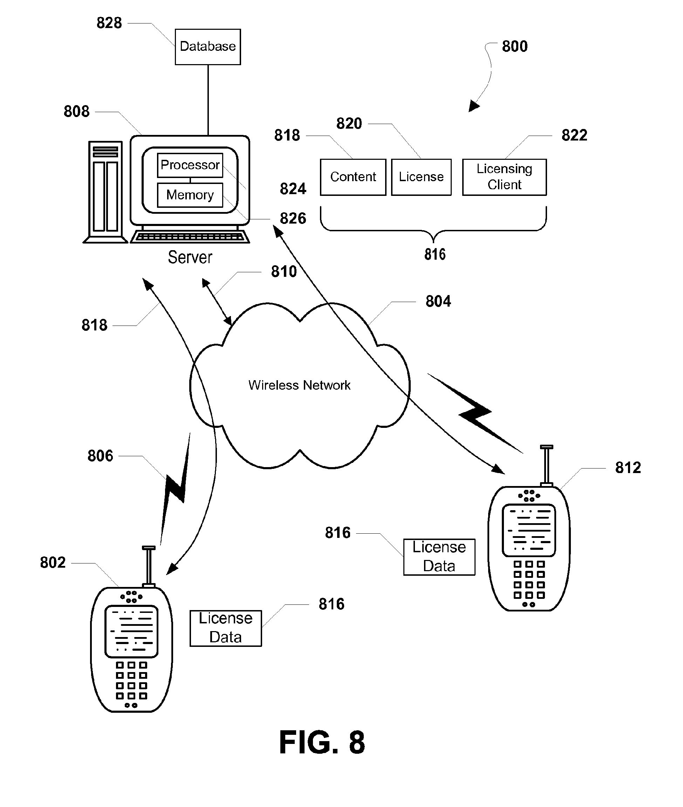

FIG. 8 illustrates a data network 800, according to one aspect. The network 800 may include a first wireless device 802 that communicates with a wireless data network 804 via a wireless communication channel 806. The network 800 may also include a server 808 that operates to provide services to the first wireless device 802 and other entities in communication with the network 804. The server 808 may be coupled to the network 804 by link 810, which may be any type of wired or wireless link. For example, in one aspect, the wireless device 802 may be a wireless telephone, and the server 808 may be part of a nationwide telecommunications network that provides applications and/or multimedia content to the device 802. A second wireless device 812 may also be coupled to the network 804.

In a particular aspect, the server 808 may transmit and receive, license data 816 to and from the first wireless device 802, the second wireless device 812, or a combination thereof. According to one implementation, the license data 816 may include music or video content 818, a license 820 to access content, and a licensing client 822. In a particular aspect, the server 808 may transmit, or receive, the license data 816 to, or from, a wireless device 802, 808.

FIG. 8 further shows that the server 808 may include a processor 824 and a memory 826, or some other computer-readable medium, that is accessible to the processor 824. Further, a database 828 may be coupled or otherwise connected to the server 808. License data 816 may be stored in the database 828.

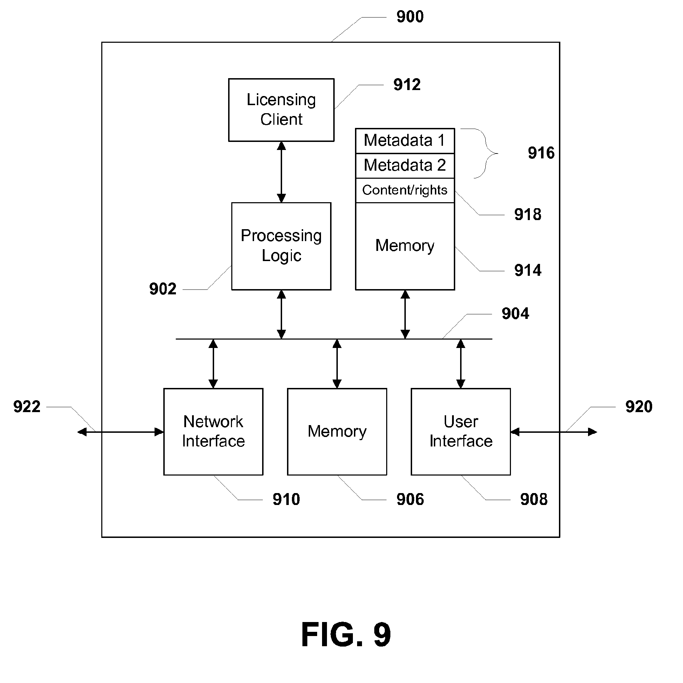

FIG. 9 shows a functional block diagram illustrating one aspect of a server 900 that is operable to deliver streaming content to one or more wireless devices over a wireless data network. As depicted in FIG. 9, the server 900 may include processing logic 902 that is coupled to an internal data bus 904. Also coupled to the internal data bus 904 are a memory 906, a user interface 908, and a network interface 910. The server 900 may also include a licensing client 912 that may be accessible to the processing logic 902 and an application memory 906 coupled to the internal bus 904. The server 900 may further include a licensing service 914 coupled to the internal data bus 904. The licensing service 914 may be an application stored in a memory that may be executed by the processing logic 902. The licensing service 914 and the processing logic 902 may be operable to execute one or more of the method steps described herein. One or more of the method steps may be stored as instructions, e.g., within the memory 906. The licensing service 914 may include metadata 916 associated with one or more users, or user devices. Further, the licensing service 914 may include content/rights 918. The licensing service 914 may use the metadata 916 in order to locate content, rights associated with the content, and to grant a license, or licenses, to use the content at a wireless device.

In one or more aspects, the processing logic 902 comprises a CPU, a gate array, hardware logic, software, or a combination of hardware and software. Thus, the processing logic 902 may generally include logic to execute machine-readable instructions. In other words, the processing logic 902 may act as a means for executing one or more computer programs that may include the method steps disclosed herein.

The memory 906 may include random access memory (RAM), read only memory (ROM), flash memory, electrically erasable read only memory (EEROM), or any other suitable type of memory, or a combination thereof. In one aspect, the memory 906 is located internally to the server 900. In another aspect, the memory 906 comprises a removable memory card or memory device that may be selectively attached to the server 900 and thereby being coupled to the internal bus 904. Thus, the memory 906 may comprise virtually any type of memory that is capable of storing instructions that may be executed by the processing logic 902.

The user interface 908 may receive user input 920, for example, from a keypad, a pointing device, a touch pad, or any other input mechanisms which allow a user to interact with a wireless device. The user interface 908 may also be coupled to a display device, such as a cathode ray tube (CRT) display, a liquid crystal display (LCD), a light emitting diode (LED), or any other type of display device to provide a visual display to the user. Any other type of input or output device may also be coupled to the user interface 908, such as, disk storage, audio logic, video devices, etc.

The network interface 910 operates to transmit and receive information between the server 900 and external devices, systems, and/or networks using a communication link 922. For example, in one aspect, the network interface 910 comprises a radio transceiver circuit (not shown) that operates to transmit and receive information over a wireless data network using the communication link 922. For example, the communication link 922 may be the communication link 106 shown in FIG. 1. For example, the transceiver comprises circuitry that modulates information received from the processing logic 902 and converts the modulated information into high frequency signals suitable for wireless transmission. Similarly, the transceiver also comprises circuitry to convert received high frequency communication signals into signals suitable for demodulation and subsequent processing by the processing logic 902.

In another aspect, the network interface 910 comprises a transceiver that operates to transmit and receive information over a hardwired communication link, such as a telephone line, or other type of data line, to communicate with a remote system on a public data network, such as the Internet.

In still another aspect, the network interface 910 comprises circuitry that operates to communicate with local devices, such as a local workstation. The network interface 910 may also include circuitry (such as serial or parallel port logic) to communicate with a printer or other local computer or device, such as a floppy disk or a memory card. Thus, the network interface 910 may comprise any type of hardware, software, or combination thereof to allow the server 900 to communicate with other local or remotely located devices or systems.

During operation of the server 900, the processing logic 902 may execute program instructions stored in the memory 906 to perform the functions described herein. For example, in one aspect, the server 900 may perform the described functions when the processing logic 902 executes program instructions stored in the memory 906. In another aspect, the program instructions are stored on a computer-readable medium, such as a floppy disk, a compact disc (CD), a memory card, a flash memory device, a ROM, or any other type of memory device. The program instructions may be loaded into the memory 906 via the network interface 910. For example, the server 900 may download the program instructions from the computer-readable medium into the memory 906 via the network interface 910.

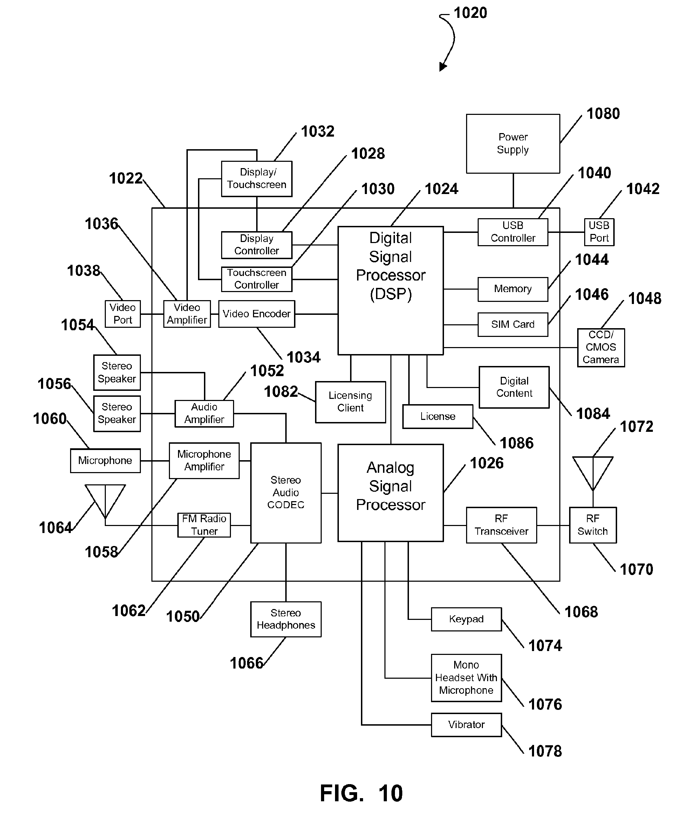

Referring to FIG. 10, an exemplary, non-limiting aspect of a wireless telephone is shown and is generally designated 1020. As shown, the wireless device 1020 includes an on-chip system 1022 that includes a digital signal processor 1024 and an analog signal processor 1026 that are coupled together. As illustrated in FIG. 10, a display controller 1028 and a touchscreen controller 1030 are coupled to the digital signal processor 1024. In turn, a touchscreen display 1032 external to the on-chip system 1022 is coupled to the display controller 1028 and the touchscreen controller 1030.

FIG. 10 further indicates that a video encoder 1034, e.g., a phase alternating line (PAL) encoder, a sequential couleur a memoire (SECAM) encoder, or a national television system(s) committee (NTSC) encoder, is coupled to the digital signal processor 1024. Further, a video amplifier 1036 is coupled to the video encoder 1034 and the touchscreen display 1032. Additionally, a video port 1038 is coupled to the video amplifier 1036. As depicted in FIG. 10, a universal serial bus (USB) controller 1040 is coupled to the digital signal processor 1024. Furthermore, a USB port 1042 is coupled to the USB controller 1040. A memory 1044 and a subscriber identity module (SIM) card 1046 may also be coupled to the digital signal processor 1024. Further, as shown in FIG. 10, a digital camera 1048 may be coupled to the digital signal processor 1024. In an exemplary aspect, the digital camera 1048 is a charge-coupled device (CCD) camera or a complementary metal-oxide semiconductor (CMOS) camera.

As further illustrated in FIG. 10, a stereo audio CODEC 1050 may be coupled to the analog signal processor 1026. Moreover, an audio amplifier 1052 may be coupled to the stereo audio CODEC 1050. In an exemplary aspect, a first stereo speaker 1054 and a second stereo speaker 1056 are coupled to the audio amplifier 1052. FIG. 10 shows that a microphone amplifier 1058 may be also coupled to the stereo audio CODEC 1050. Additionally, a microphone 1060 may be coupled to the microphone amplifier 1058. In a particular aspect, a frequency modulation (FM) radio tuner 1062 may be coupled to the stereo audio CODEC 1050. Additionally, an FM antenna 1064 is coupled to the FM radio tuner 1062. Further, stereo headphones 1066 may be coupled to the stereo audio CODEC 1050.

FIG. 10 further indicates that a radio frequency (RF) transceiver 1068 may be coupled to the analog signal processor 1026. An RF switch 1070 may be coupled to the RF transceiver 1068 and an RF antenna 1072. As shown in FIG. 10, a keypad 1074 may be coupled to the analog signal processor 1026. Furthermore, a mono headset with a microphone 1076 may be coupled to the analog signal processor 1026. Further, a vibrator device 1078 may be coupled to the analog signal processor 1026. FIG. 10 also shows that a power supply 1080 may be coupled to the on-chip system 1022. In a particular aspect, the power supply 1080 is a direct current (DC) power supply that provides power to the various components of the wireless device 1020 that require power. Further, in a particular aspect, the power supply is a rechargeable DC battery or a DC power supply that is derived from an alternating current (AC) to DC transformer that is connected to an AC power source.

FIG. 10 also shows that the wireless device 1020 may also include a licensing client 1082, e.g., the licensing client described above in conjunction with FIG. 1 through FIG. 5. The wireless device 1020 may also include digital content 1084 and a license 1086 to access the digital content 1084. The licensing client 1084 may be operable to capture metadata 1086 associated with particular digital content 1084. The licensing client 1084 may also be operable to transmit the metadata 1086 to a licensing server and receive the license 1086 from the licensing server.

As depicted in FIG. 10, the touchscreen display 1032, the video port 1038, the USB port 1042, the camera 1048, the first stereo speaker 1054, the second stereo speaker 1056, the microphone 1060, the FM antenna 1064, the stereo headphones 1066, the RF switch 1070, the RF antenna 1072, the keypad 1074, the mono headset 1076, the vibrator 1078, and the power supply 1080 are external to the on-chip system 1022.

In a particular aspect, one or more of the method steps described herein may be stored in the memory 1044 as computer program instructions. These instructions may be executed by a processor 1024, 1026 in order to perform the methods described herein. Further, the processors, 1024, 1026, the memory 1044, the instructions stored therein, or a combination thereof may serve as a means for performing one or more of the method steps described herein.

It is to be understood that the method steps described herein do not necessarily have to be performed in the order as described. Further, words such as "thereafter," "then," "next," etc. are not intended to limit the order of the steps. These words are simply used to guide the reader through the description of the method steps.

It is to be understood that in the systems described herein, the devices and servers may include, but are not limited to, any device having a computer platform comprising a memory and a processor. The memory, i.e., a computer-readable medium, may act as a means for storing an application that may be executed to perform the various steps described herein in order to request a license, grant a license, or a combination thereof. Further, the processor may act as a means for executing such applications.

The original devices, for example, may include any type of wired or wireless device (e.g., a cellular telephone, a Personal Digital Assistant (PDA), a laptop computer, a personal gaming device, a two-way pager, a portable music device, etc.). Further, the licensing servers may include any type of wired or wireless device (e.g., laptop computer, desktop computer, etc.). The destination devices may include any type of wired or wireless device (e.g., a cellular telephone, a Personal Digital Assistant (PDA), a laptop computer, a personal gaming device, a two-way pager, a portable music device, etc.). Moreover, it may be appreciated that a mobile computer system may be any transportable computer system (e.g., a laptop, handtop, palmtop, mobile telephone, etc.).

It may also be appreciated that the originating devices illustrate just one aspect, and that other device configurations are possible to provide the functions described herein. For example, it is possible that the functional elements of the original device be combined, rearranged, changed, added to, or deleted within the scope of the disclosed described herein. It should further be noted that the licensing servers illustrate one or more aspects, and that other configurations are possible to provide the functions described herein. For example, it is possible that the functional elements of the licensing server may be combined, rearranged, changed, added to, or deleted within the scope of the described disclosure. It should further be noted that the destination devices illustrate one aspect, and that other device configurations are possible to provide the functions described herein. For example, it is possible that the functional elements of the destination devices be combined, rearranged, changed, added to, or deleted within the scope of the disclosed described herein.

One of ordinary skill in the art must appreciate that the devices and the servers are depicted in a simplified manner to emphasize certain components that may provide functionality relating to the content licensing system and associated processing. It should be appreciated that a given device may incorporate the functionality depicted for devices, the functionality depicted for servers, or some combination thereof, as well as other functionality.

For the purpose of this description, it will be assumed that entities transmitting the above-described information are properly credentialed using any type of known credentialing or authentication technique, so that any receiving device may verify that it is receiving information from a trusted source.

In one or more aspects, the content licensing systems may utilize one or more security techniques to provide security and/or privacy during the process. For example, in one aspect, the licensing servers may require secret security codes from the user before processing the user's request. The security codes may comprise the identity of the users, PIN numbers or other security codes, or any other type of security information, so that the security and privacy of the users may be maintained.

As stated above, the devices and the servers may include, but are not limited to, devices that include a computer platform comprising a memory and a processor. The computer platform may be operable to transmit or receive data across the network or execute routines and/or applications. The computer platform may further be operable to display optionally data transmitted from any network device or other computer device connected to the network or connected to the devices and server. For example, the computer platform may be embodied in hardware, firmware, software, data, executable instructions, and combinations thereof.

The computer platform may include memory, which may comprise volatile and nonvolatile memory. Additionally, the processor may include various processing subsystems embodied in hardware, firmware, software, data, executable instructions and combinations thereof, which enable the functionality of the devices and the servers and the operability of the same on the network. One or more of the method steps described herein may be instructions stored in a computer-readable medium, i.e., a memory. A processor may execute the instructions in order to perform the method steps described herein. Accordingly, the processor, the memory, the instructions, or a combination thereof may serve as a means for executing the one or more method steps described herein.

One of ordinary skill in the art must further appreciate that the configurations of the content licensing systems are exemplary configurations suitable for implementing different aspects of the content licensing systems. As such, it is also possible to implement the content licensing system using other functional elements or element configurations within the scope of the present application.

It should be noted that the server configurations and device configurations illustrated in FIG. 1 through FIG. 5 illustrate just some aspects, and that other server configurations and/or device configurations are possible to provide the functions described herein. For example, it is possible that the functional elements of the servers and/or devices be combined, rearranged, changed, added to, or deleted within the scope of the described. It also should be appreciated that one or more of the operations described herein may not be employed in a given implementation.

Those of skill should further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

One of ordinary skill in the art must further appreciate that the wired and/or wireless connection may further include a network, such as one or any combination of a data network and a communications network. In some aspects, for example, the network may comprise all or some portion of a multicast network such as a Forward Link Only (FLO) network, including the MediaFLO^{™} System available from Qualcomm Incorporated of San Diego, California. In one aspect, the network may include one or a combination of other networks, such as: a digital video broadcasting (DVB) network, such as DVB-S for satellite, DVB-C for cable, DVB-T for terrestrial television, DVB-H for terrestrial television for handhelds; a terrestrial telephone network; a satellite telephone network; an infrared network such as an Infrared Data Association (IrDA)-based network; a short-range wireless network; a Bluetooth® technology network; a ZigBee^{®} protocol network; an ultra wide band (UWB) protocol network; a home radio frequency (HomeRF) network; a shared wireless access protocol (SWAP) network; a wideband network, such as a wireless Ethernet compatibility alliance (WECA) network, a wireless fidelity alliance (Wi-Fi Alliance) network, and a 802.xx network; a public switched telephone network; a public heterogeneous communications network, such as the Internet; a private communications network; and land mobile radio network.

Further, examples of telephone networks that may be included in some aspects of the network include one, or any combination, of analog and digital networks/technologies, such as: code division multiple access (CDMA), wideband code division multiple access (WCDMA), universal mobile telecommunications system (UMTS), advanced mobile phone service (AMPS), time division multiple access (TDMA), frequency division multiple access (FDMA), orthogonal frequency division multiple access (OFDMA), global system for mobile communications (GSM), single carrier (1X) radio transmission technology (RTT), evolution data only (EV-DO) technology, general packet radio service (GPRS), enhanced data GSM environment (EDGE), high speed downlink data packet access (HSPDA), analog and digital satellite systems, and any other technologies/protocols that may be used in at least one of a communications network and a data network.

Additionally, the computer platform may be embodied in hardware, firmware, software, data, executable instructions, and combinations thereof.

In one aspect in which the destination devices are defined as exemplary cellular telephones, the processor may additionally include one or a combination of processing subsystems for communications, such as sound, non-volatile memory, file system, transmit, receive, searcher, layer 1, layer 2, layer 3, main control, remote procedure, handset, power management, digital signal processor, messaging, call manager, Bluetooth^{®} system, Bluetooth^{®} LPOS, position engine, user interface, sleep, data services, security, authentication, USIM/SIM, voice services, vocoder, messaging, graphics, USB, multimedia, etc. For the disclosed aspects, processing subsystems of processor may include any subsystem components that interact with applications executing on computer platform that enable the functionality described herein.

Additionally, devices and server may have one or more input mechanisms for generating inputs into the device, and may further have one or more output mechanism for generating information for consumption by the user of the device. For example, input mechanism may include a mechanism such as a key or keyboard, a navigation mechanism, a mouse, a touch-screen display, a microphone in association with a voice recognition module, etc. In certain aspects, input mechanism provides for user input to activate or interact with an application or module on the wireless device. Further, for example, output mechanism may include display operable to present a UI, an audio speaker, a haptic feedback mechanism, etc.

The various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above.

Further, in one or more exemplary aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that may be accessed by a computer. By way of example, and not limitation, such computer-readable media may comprise RAM, ROM, EEPROM, CD-ROM or other optical disk storage, magnetic disk storage or other magnetic storage devices, or any other medium that may be used to carry or store desired program code in the form of instructions or data structures and that may be accessed by a computer. In addition, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above should also be included within the scope of computer-readable media.

While the foregoing disclosure shows illustrative aspects, it should be noted that various changes and modifications could be made herein without departing from the scope of the described aspects, as defined by the appended claims. Furthermore, although elements of the described aspects may be described or claimed in the singular, the plural is contemplated unless limitation to the singular is explicitly stated. Additionally, all or a portion of any aspect may be utilized with all or a portion of any other aspect, unless stated otherwise.

### SPECIFIC EMBODIMENTS

1. A method of obtaining one or more licenses to use content, the method comprising:
   scanning an original device to locate digital content residing thereon; and
   requesting a license to use the digital content on the original device, a destination device, or a combination thereof from a licensing server.
2. The method of embodiment 1, further comprising:
   generating a list of digital content for which the license is requested; and
   transmitting the list of digital content to the licensing server.
3. The method of embodiment 1, further comprising:
   generating a list of metadata associated with the digital content for which the license is requested; and
   transmitting the list of metadata to the licensing server.
4. The method of embodiment 1, further comprising:
   receiving notification that the licensing server located matching content and associated rights.
5. The method of embodiment 4, further comprising:
   transmitting a type of license requested; and
   receiving the requested type of license.
6. The method of embodiment 1, wherein the digital content is authorized for use, unauthorized for use, or a combination thereof.
7. The method of embodiment 6, wherein the license authorizes use of digital content previously unauthorized for use.
8. A device for accessing content, the device comprising:
   means for scanning an original device to locate digital content residing thereon; and
   means for requesting a license to use the digital content on the original device, a destination device, or a combination thereof from a licensing server.
9. The device of embodiment 8, further comprising:
   means for generating a list of digital content for which the license is requested; and
   means for transmitting the list of digital content to the licensing server.
10. The device of embodiment 8, further comprising:
   means for generating a list of metadata associated with the digital content for which the license is requested; and
   means for transmitting the list of metadata to the licensing server.
11. The device of embodiment 8, further comprising:
   means for receiving notification that the licensing server located matching content and associated rights.
12. The device of embodiment 11, further comprising:
   means for transmitting a type of license requested; and
   means for receiving the requested type of license.
13. The device of embodiment 8, wherein the digital content is authorized for use, unauthorized for use, or a combination thereof.
14. The device of embodiment 13, wherein the license authorizes use of digital content previously unauthorized for use.
15. A device for accessing content, the device comprising:
   a processor; and
   a memory accessible to the processor, wherein the memory comprises:
      at least one instruction for scanning an original device to locate digital content residing thereon; and
      at least one instruction for requesting a license to use the digital content on the original device, a destination device, or a combination thereof from a licensing server.
16. The device of embodiment 15, wherein the memory further comprises:
   at least one instruction for generating a list of digital content for which the license is requested; and
   at least one instruction for transmitting the list of digital content to the licensing server.
17. The device of embodiment 15, wherein the memory further comprises:
   at least one instruction for generating a list of metadata associated with the digital content for which the license is requested; and
   at least one instruction for transmitting the list of metadata to the licensing server.
18. The device of embodiment 15, wherein the memory further comprises:
   at least one instruction for receiving notification that the licensing server located matching content and associated rights.
19. The device of embodiment 18, wherein the memory further comprises:
   at least one instruction for transmitting a type of license requested; and
   at least one instruction for receiving the requested type of license.
20. The device of embodiment 15, wherein the digital content is authorized for use, unauthorized for use, or a combination thereof.
21. The device of embodiment 20, wherein the license authorizes use of digital content previously unauthorized for use.
22. A computer program product, comprising:
   a computer-readable medium, comprising:
      at least one instruction for causing a computer to scan an original device to locate digital content residing thereon; and
      at least one instruction for causing a computer to request a license to use the digital content on the original device, a destination device, or a combination thereof from a licensing server.
23. The computer program product of embodiment 22, wherein the computer readable medium further comprises:
   at least one instruction for causing a computer to generate a list of digital content for which the license is requested; and
   at least one instruction for causing a computer to transmit the list of digital content to the licensing server.
24. The computer program product of embodiment 22, wherein the computer readable medium further comprises:
   at least one instruction for causing a computer to generate a list of metadata associated with the digital content for which the license is requested; and
   at least one instruction for causing a computer to transmit the list of metadata to the licensing server.
25. The computer program product of embodiment 22, wherein the computer readable medium further comprises:
   at least one instruction for causing a computer to receive notification that the licensing server located matching content and associated rights.
26. The computer program product of embodiment 22, wherein the computer readable medium further comprises:
   at least one instruction for causing a computer to transmit a type of license requested; and
   at least one instruction for causing a computer to receive the requested type of license.
27. The computer program product of embodiment 22, wherein the digital content is authorized for use, unauthorized for use, or a combination thereof.
28. The computer program product of embodiment 27, wherein the license authorizes use of digital content previously unauthorized for use.
29. A method of managing content licenses, the method comprising:
   receiving a request for a license to use content at a destination device from an original device;
   receiving a list of digital content from the original device for which the license is requested; and
   searching a content-rights database to locate matching content.
30. The method of embodiment 29, further comprising:
   transmitting a notification to the original device that matching content is located within the content-rights database.
31. The method of embodiment 30, further comprising:
   receiving a type of license requested from the original device.
32. The method of embodiment 31 , further comprising:
   downloading a licensing client to the destination device.
33. The method of embodiment 32, further comprising:
   downloading the matching digital content to the destination device.
34. The method of embodiment 33, further comprising:
   transmitting the license to the destination device; and
   transmitting a copy of the license to the original device.
35. The method of embodiment 29, further comprising:
   receiving a list of metadata associated with digital content; and
   searching the content-rights database using the metadata.
36. The method of embodiment 29, further comprising:
   receiving digital content from a rights holder;
   receiving rights associated with the digital content from the rights holder; and
   storing the digital content and associated rights in the content-rights database.
37. A licensing server, the server comprising:
   means for receiving a request for a license to use content at a destination device from an original device;
   means for receiving a list of digital content from the original device for which the license is requested; and
   means for searching a content-rights database to locate matching content.
38. The licensing server of embodiment 37, further comprising:
   means for transmitting a notification to the original device that matching content is located within the content-rights database.
39. The licensing server of embodiment 38, further comprising:
   means for receiving a type of license requested from the original device.
40. The licensing server of embodiment 39, further comprising:
   means for downloading a licensing client to the destination device.
41. The licensing server of embodiment 40, further comprising:
   means for downloading the matching digital content to the destination device.
42. The licensing server of embodiment 41 , further comprising:
   means for transmitting the license to the destination device; and
   means for transmitting a copy of the license to the original device.
43. The licensing server of embodiment 37, further comprising:
   means for receiving a list of metadata associated with digital content; and
   means for searching the content-rights database using the metadata.
44. The licensing server of embodiment 37, further comprising:
   means for receiving digital content from a rights holder;
   means for receiving rights associated with the digital content from the rights holder; and
   means for storing the digital content and associated rights in the content-rights database.
45. A licensing server, the server comprising:
   a processor; and
   a memory accessible to the processor, wherein the memory comprises:
      at least one instruction for receiving a request for a license to use content at a destination device from an original device;
      at least one instruction for receiving a list of digital content from the original device for which the license is requested; and
      at least one instruction for searching a content-rights database to locate matching content.
46. The licensing server of embodiment 45, wherein the memory further comprises:
   at least one instruction for transmitting a notification to the original device that matching content is located within the content-rights database.
47. The licensing server of embodiment 46, wherein the memory further comprises:
   at least one instruction for receiving a type of license requested from the original device.
48. The licensing server of embodiment 47, wherein the memory further comprises:
   at least one instruction for downloading a licensing client to the destination device.
49. The licensing server of embodiment 48, wherein the memory further comprises:
   at least one instruction for downloading the matching digital content to the destination device.
50. The licensing server of embodiment 49, wherein the memory further comprises:
   at least one instruction for transmitting the license to the destination device; and
   at least one instruction for transmitting a copy of the license to the original device.
51. The licensing server of embodiment 45, wherein the memory further comprises:
   at least one instruction for receiving a list of metadata associated with digital content; and
   at least one instruction for searching the content-rights database using the metadata.
52. The licensing server of embodiment 45, wherein the memory further comprises:
   at least one instruction for receiving digital content from a rights holder;
   at least one instruction for receiving rights associated with the digital content from the rights holder; and
   at least one instruction for storing the digital content and associated rights in the content-rights database.
53. A computer program product, comprising:
   a computer-readable medium comprising:
      at least one instruction for causing a computer to receive a request for a license to use content at a destination device from an original device;
      at least one instruction for causing a computer to receive a list of digital content from the original device for which the license is requested; and
      at least one instruction for causing a computer to search a content-rights database to locate matching content.
54. The computer program product of embodiment 53, wherein the computer-readable medium further comprises:
   at least one instruction for causing a computer to transmit a notification to the original device that matching content is located within the content-rights database.
55. The computer program product of embodiment 54, wherein the computer-readable medium further comprises:
   at least one instruction for causing a computer to receive a type of license requested from the original device.
56. The computer program product of embodiment 55, wherein the computer-readable medium further comprises:
   at least one instruction for causing a computer to download a licensing client to the destination device.
57. The computer program product of embodiment 56, wherein the computer-readable medium further comprises:
   at least one instruction for causing a computer to download the matching digital content to the destination device.
58. The computer program product of embodiment 57, wherein the computer-readable medium further comprises:
   at least one instruction for causing a computer to transmit the license to the destination device; and
   at least one instruction for causing a computer to transmit a copy of the license to the original device.
59. The computer program product of embodiment 53, wherein the computer-readable medium further comprises:
   at least one instruction for causing a computer to receive a list of metadata associated with digital content; and
   at least one instruction for causing a computer to search the content-rights database using the metadata.
60. The computer program product of embodiment 53, wherein the computer-readable medium further comprises:
   at least one instruction for causing a computer to receive digital content from a rights holder;
   at least one instruction for causing a computer to receive rights associated with the digital content from the rights holder; and
   at least one instruction for causing a computer to store the digital content and associated rights in the content-rights database.
61. A content licensing system, comprising:
   a first device operable to access content; and
   a licensing server in communication with the first device, the licensing server operable to generate a license to use the content accessible by the first device.
62. The content licensing system of embodiment 61 , further comprising:
   a second device in communication with the licensing server, the second device operable to access the content accessible by the first device.
63. A content licensing system, comprising:
   a first device operable to access content; and
   a licensing server in communication with the first device, the licensing server operable to generate a license to own a right to the content accessible by the first device.
64. The content licensing system of embodiment 63, further comprising:
   a second device in communication with the licensing server, the second device operable to access the content accessible by the first device under the license.
65. A content licensing system, comprising:
   a first device operable to access content;
   a second device; and
   a licensing server in communication with the first device and the second device, the licensing server operable to generate a license to use the content accessible by the first device on the second device.
66. A content licensing system, comprising:
   a first device operable to access content;
   a second device; and
   a licensing server in communication with the first device and the second device, the licensing server operable to generate a license to own a right to the content accessible by the first device, wherein the second device is operable to access the content under the generated license.

## Claims

1. A method for obtaining one or more licenses to use content, the method comprising:
scanning an original device (102) to locate digital content residing thereon; and
requesting a license to use the digital content on the original device (102) from a licensing server (106).

2. The method of claim 1, further comprising:
generating a list of digital content for which the license is requested; and
transmitting the list of digital content to the licensing server (106).

3. The method of claim 1, further comprising:
generating a list of metadata associated with the digital content for which the license is requested; and
transmitting the list of metadata to the licensing server (106).

4. The method of claim 1, further comprising:
receiving notification that the licensing server (106) located matching content and associated rights and, preferably, transmitting a type of license requested and receiving the requested type of license.

5. The method of claim 1, wherein the digital content is authorized for use, unauthorized for use, or a combination thereof

6. The method of claim 6, wherein the license authorizes use of digital content previously unauthorized for use.

7. The method of claim 1, wherein requesting a license comprises requesting a license to use the digital content on the original device (102) and on a destination device (104).

8. A device for accessing content, the device comprising:
means for scanning an original device (102) to locate digital content residing thereon; and
means for requesting a license to use the digital content on the original device (102) from a licensing server (106).

9. The device of claim 8, further comprising:
means for generating a list of digital content for which the license is requested; and
means for transmitting the list of digital content to the licensing server (106).

10. The device of claim 8, further comprising:
means for generating a list of metadata associated with the digital content for which the license is requested; and
means for transmitting the list of metadata to the licensing server (106).

11. The device of claim 8, further comprising:
means for receiving notification that the licensing server (106) located matching content and associated rights and, preferably, means for transmitting a type of license requested and means for receiving the requested type of license.

12. The device of claim 8, wherein the digital content is authorized for use, unauthorized for use, or a combination thereof.

13. The device of claim 12, wherein the license authorizes use of digital content previously unauthorized for use.

14. The device of claim 8, wherein the means for requesting a license comprises means for requesting a license to use the digital content on the original device (102) and on a destination device (104).

15. A computer program product, comprising:
a computer-readable medium comprising:
at least one instruction for causing a computer to perform a method in accordance with any of claims 1 to 7.
